# EUROPÄISCHE PATENTSCHRIFT

(11) **EP 3 996 972 B1**
(45) Veröffentlichungstag und Bekanntmachung des Hinweises auf die Patenterteilung: **04.12.2024**
(21) Anmeldenummer: 20737430.7
(22) Anmeldetag: 07.07.2020
(51) Int. Cl.: B62D 5/00, B62D 1/16

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 09.07.2019 DE 102019210096
(43) Veröffentlichungstag der Anmeldung: 18.05.2022
(73) Patentinhaber: thyssenkrupp Presta AG, 9492 Eschen (LI); thyssenkrupp AG, 45143 Essen (DE)
(72) Erfinder: REITER, Gerald, 5061 Elsbethen (AT)
(74) Vertreter: thyssenkrupp Intellectual Property GmbH
(86) Internationale Anmeldenummer: PCT/EP2020/069046
(87) Internationale Veröffentlichungsnummer: WO 2021/005022

(56) Entgegenhaltungen:
- WO-A1-2018/139044
- DE-A1- 102015 015 148
- DE-A1- 102017 209 664
- DE-B3- 102013 014 137

## Beschreibung

### Stand der Technik

Die Erfindung betrifft eine Lenksäule für ein Kraftfahrzeug, die eine relativ zu einem Lenksäulengehäuse um ihre Längsachse drehbar gelagerte Lenkwelle umfasst und zur Begrenzung der Rotation der Lenkwelle einen Umdrehungsbegrenzer aufweist, der einen mit der Lenkwelle drehfest verbundenen Wickelkern aufweist, an dem ein mit dem Lenksäulengehäuse verbundenes, langgestrecktes und quer zu seiner Längserstreckung flexibel verformbares Bandelement angebracht ist, welches mindestens einen Bandabschnitt aufweist, der auf dem Wickelkern in einem Wickelsinn um die Längsachse aufwickelbar ist, wobei der Wickelsinn des Bandabschnitts umkehrbar ist.

Derartige Lenksäulen mit einem Umdrehungsbegrenzer sind bevorzugt für Steer-by-Wire-Lenksysteme geeignet.

In der fest mit der Fahrzeugkarosserie verbindbaren Trageinheit ist die Lenkwelle drehbar gelagert oder drehbar von der Trageinheit getragen. Zur Lenkung des Kraftfahrzeugs wird durch Drehung des am fahrerseitigen, hinteren Ende der Lenkwelle angebrachten Lenkrads vom Fahrer ein Lenkbefehl eingegeben, der in einen Lenkeinschlag der lenkbaren Räder des Kraftfahrzeugs umgesetzt wird. Während bei einem konventionellen Lenksystem die Lenkwelle über eine Lenkgetriebe mechanisch mit den Rädern verbunden ist, wird in einem Steer-by-wire-Lenksystem die Rotation der Lenkwelle mittels Sensoren erfasst und in ein elektrisches Steuersignal zur Ansteuerung von elektrischen Lenkaktoren umgesetzt. Durch die dabei fehlende mechanische Kopplung mit den Rädern wird die Drehung der Lenkwelle nicht durch den mechanischen Endanschlag der Räder bei Erreichen des maximalen Lenkeinschlags begrenzt. Um dennoch ein zu starkes Einlenken zu vermeiden und auch ein realistisches Lenkgefühl zu simulieren, ist es bekannt, den maximal möglichen Drehwinkel des Lenkrads mittels eines Umdrehungsbegrenzers zu beschränken, der eine Begrenzungseinrichtung zur Begrenzung der maximal möglichen Rotation der Lenkwelle bildet.

Eine Lenksäule mit einem Umdrehungsbegrenzer der eingangs genannten Art ist beispielsweise aus der DE 10 2017 209 664 A1 oder der DE 100 51 187 A1 bekannt. Dieser weist ein flexibles langgestrecktes Bandelement aus, welches als Spiralfeder spiralförmig auf einem mit der Lenkwelle drehfest verbundenen Wickelkern aufgewickelt ist, an dem das eine, nämlich das innere Ende des Bandelements befestigt ist. Das andere, äußere Ende des Bandelements ist mit dem Lenksäulengehäuse fest verbunden, welches einen relativ zur Lenkwelle feststehenden Teil der Lenksäule darstellt. Die Lenkwelle kann durch Betätigung des Lenkrads in eine Drehrichtung, welche dem Wickelsinn der Spiralfeder entspricht, so weit gedreht werden, bis die Spiralfeder auf Block geht, wobei ein Bandabschnitt des Bandelements dicht auf dem Wickelkern aufgewickelt ist. Dadurch, dass dann das Bandelement zwischen dem Wickelkern und dem Lenksäulengehäuse auf Zug gespannt ist, wird der maximale Lenkwinkel begrenzt und eine weitere Drehung in dieser Drehrichtung ist nicht möglich.

Dadurch, dass die Spiralfeder einen vorgegebenen Wickelsinn hat, kann sie funktional bedingt nur zur Begrenzung des Lenkwinkels in einer Drehrichtung eingesetzt werden. Da es jedoch zwingend erforderlich ist, den Lenkwinkel in beide möglichen Drehrichtungen zu begrenzen, müssen im Stand der Technik pro Lenksäule zwei gegensinnig gewickelte Spiralfedern eingesetzt werden. Dies führt zu einem entsprechend hohen Fertigungs- und Montageaufwand, und erfordert einen relativ großen Bauraum und zu hohen Kosten.

Eine Lenksäule der eingangs genannten Art ist in der WO 2018/139044 A1 beschrieben.

Angesichts der vorangehend erläuterten Problematik ist es eine Aufgabe der vorliegenden Erfindung, den Aufwand für den Umdrehungsbegrenzer zur verringern, und eine kleinere Bauform zu ermöglichen.

### Darstellung der Erfindung

Diese Aufgabe wird erfindungsgemäß gelöst durch eine Lenksäule mit den Merkmalen des Anspruchs 1, des Anspruchs 2 oder des Anspruchs 3. Vorteilhafte Weiterbildungen ergeben sich aus den Unteransprüchen.

Bei einer Lenksäule für ein Kraftfahrzeug, die eine relativ zu einem Lenksäulengehäuse um ihre Längsachse drehbar gelagerte Lenkwelle umfasst und zur Begrenzung der Rotation der Lenkwelle einen Umdrehungsbegrenzer aufweist, der einen mit der Lenkwelle drehfest verbundenen Wickelkern aufweist, an dem ein mit dem Lenksäulengehäuse verbundenes, langgestrecktes und quer zu seiner Längserstreckung flexibel verformbares Bandelement angebracht ist, welches mindestens einen Bandabschnitt aufweist, der auf dem Wickelkern in einem Wickelsinn um die Längsachse aufwickelbar ist, wobei der Wickelsinn des Bandabschnitts umkehrbar ist, ist erfindungsgemäß vorgesehen, dass mindestens zwei Bandabschnitte vorgesehen sind, die mindestens zweigängig übereinander wickelbar sind.

Alternativ kann bei einer Lenksäule für ein Kraftfahrzeug, die eine relativ zu einem Lenksäulengehäuse um ihre Längsachse drehbar gelagerte Lenkwelle umfasst und zur Begrenzung der Rotation der Lenkwelle einen Umdrehungsbegrenzer aufweist, der einen mit der Lenkwelle drehfest verbundenen Wickelkern aufweist, an dem ein mit dem Lenksäulengehäuse verbundenes, langgestrecktes und quer zu seiner Längserstreckung flexibel verformbares Bandelement angebracht ist, welches mindestens einen Bandabschnitt aufweist, der auf dem Wickelkern in einem Wickelsinn um die Längsachse aufwickelbar ist, wobei der Wickelsinn des Bandabschnitts umkehrbar ist, erfindungsgemäß vorgesehen sein, dass der Wickelkern und/oder das Lenksäulengehäuse mindestens einen Querschlitz aufweisen, durch die das Bandelement hindurchgeführt ist.

Alternativ kann bei einer Lenksäule für ein Kraftfahrzeug, die eine relativ zu einem Lenksäulengehäuse um ihre Längsachse drehbar gelagerte Lenkwelle umfasst und zur Begrenzung der Rotation der Lenkwelle einen Umdrehungsbegrenzer aufweist, der einen mit der Lenkwelle drehfest verbundenen Wickelkern aufweist, an dem ein mit dem Lenksäulengehäuse verbundenes, langgestrecktes und quer zu seiner Längserstreckung flexibel verformbares Bandelement angebracht ist, welches mindestens einen Bandabschnitt aufweist, der auf dem Wickelkern in einem Wickelsinn um die Längsachse aufwickelbar ist, wobei der Wickelsinn des Bandabschnitts umkehrbar ist, erfindungsgemäß vorgesehen sein, dass das Bandelement als geschlossene Schlaufe ausgebildet ist.

Erfindungsgemäß kann die den Wickelsinn zwischen den beiden prinzipiell möglichen Wickelrichtungen gewechselt werden. Dadurch ist es möglich, dass derselbe Bandabschnitt in demselben axialen Wickelbereich des Wickelkerns wahlweise in rechts- oder linksdrehendem Wickelsinn aufgespult bzw. aufgewickelt werden kann.

Dadurch, dass erfindungsgemäß ein Bandabschnitt alternativ in beiden möglichen, gegensinnigen Wickel- bzw. Drehrichtungen auf dem Wickelkern aufwickelbar ist, kann erstmalig mittels eines Bandelements eine Drehwinkelbegrenzung in beide möglichen Drehrichtungen erfolgen. Daraus resultieren die Vorteile, dass der Fertigungs- und Montageaufwand geringer ist als im Stand der Technik, in dem zwei Bandelemente erforderlich sind. Außerdem wird weniger Bauraum benötigt, so dass in vorteilhafter Weise eine kompakte Bauweise des Umdrehungsbegrenzers ermöglicht wird.

Bevorzugt weist der Bandabschnitt eine erste Oberfläche auf und eine dazu gleichsinnig ausgebildete zweite Oberfläche auf, wobei in dem einen Wickelsinn die erste Oberfläche mit dem Wickelkern in Kontakt bringbar ist und die zweite Oberfläche in dem umgekehrten Wickelsinn mit dem Wickelkern in Kontakt bringbar ist. Mit anderen Worten liegt je nach Wickelsinn die erste Oberfläche oder die zweite Oberfläche des Bandabschnitts an dem Wickelkern an.

In der neutralen Position, welche der Mittelstellung der Lenkung zwischen den beiden durch den Umdrehungsbegrenzer bereitgestellten Endpositionen des maximalen Drehwinkels entspricht, dies sind die Anschlagpositionen, ist das Bandelement bei der Erfindung von dem Wickelkern abgewickelt. Wird das Lenkrad aus der Mittelstellung nach rechts oder links verdreht, wird das Bandelement entsprechend rechtsdrehend oder - mit umgekehrtem Wickelsinn - linksdrehend auf dem Wickelkern aufgewickelt. In beiden Fällen wird die Umdrehungsbegrenzung erreicht, wenn der zur Verfügung stehende Wickelabschnitt auf dem Wickelkern aufgewickelt ist. Dann ist eine Anschlagsituation realisiert, in der das Bandelement das zwischen dem Wickelkern und dem Lenksäulengehäuse anliegende Lenkmoment aufnimmt. Diese Funktionsweise ist im Stand der Technik grundsätzlich nicht möglich, da die eine spezifische Wickelrichtung für ein Bandelement durch die Drehrichtung der Spiralfeder fest vorgegeben ist und nicht umgekehrt werden kann.

Es wird ein einfacher und robuster Aufbau der Umdrehungsbegrenzers ermöglicht, der im Betrieb eine hohe Laufruhe hat. Darüber hinaus ist die Funktion weniger empfindlich gegenüber Bauteil- und Maßtoleranzen.

In der Anschlagsituation ist das Bandelement auf Zug beansprucht. Bevorzugt ist das Bandelement in Zugrichtung steifer als in zumindest eine Biegerichtung.

Es kann bevorzugt vorgesehen sein, dass der Bandabschnitt zwischen dem Wickelkern und dem Lenksäulengehäuse unabhängig vom Wickelsinn in beiden Wickelrichtungen ein gleichgroßes Rückstellmoment ausübt. Das Bandelement wird beim Aufwickeln fortlaufend umgebogen, und übt durch die dabei der Umbiegung entgegenwirkende Reaktionskraft zwischen Wickelkern und Lenkgehäuse ein Rückstellmoment auf die Lenkwelle aus. Die Größe des Rückstellmoments ist abhängig von den biegeelastischen Eigenschaften des Bandelements. Für die primäre, den Drehwinkel begrenzende Funktion des Umdrehungsbegrenzers ist es wesentlich, dass das Rückstellmoment für beide Drehrichtungen des Lenkrads möglichst identisch ist. Um dies bei der Erfindung zu realisieren, ist erfindungsgemäß der Bandabschnitt des Bandelements bezüglich der Umbiegung beim Aufwickeln bevorzugt symmetrisch ausgestaltet. Dadurch kann der Biegeabschnitt quer zu seiner Längserstreckung mit der gleichen Kraft nach rechts oder links umgebogen werden, und entsprechend erfordert das Aufwickeln auf den Wickelkern im Wickelsinn und im entgegengesetzten Wickelsinn im Wesentlichen dasselbe Moment, welches als Rückstellmoment an der Lenkwelle anliegt. Dass dieses erfindungsgemäß "gleichgroß" ist, meint, dass jeweils im gleichen Wickelzustand für einen Drehwinkel der Betrag der Rückstellkraft innerhalb vorgegebener Toleranzgrenzen übereinstimmt.

Eine Ausführung der Erfindung kann dadurch realisiert sein, dass der Wickelkern einen Außenmantel aufweist. Bevorzugt ist dieser Außenmantel zylindrisch ausgebildet. Bevorzugt ist der von einem hohlzylindrischen Innenmantel des Lenksäulengehäuses mit radialem Abstand umgeben. Der zylindrische Außenmantel weist einen Wickelabschnitt mit einer axialen Breite auf, die bevorzugt an die Breite des Bandabschnitts angepasst ist. Dadurch, dass erfindungsgemäß in axialer Richtung lediglich ein Bandelement erforderlich ist, kann die axiale Abmessung des Außenmantels geringer sein als im Stand der Technik, bei dem zwei spiralförmige Bandelemente in axialer Richtung nebeneinander angeordnet sind. Daraus resultiert der Vorteil einer kompakteren Bauform. Der Außenmantel des Wickelkerns ist bevorzugt koaxial in einem hohlzylindrischen Innenraum des Lenkgehäuses angeordnet, welches den Wickelkern über seinen Umfang durchgehend, oder zumindest segmentweise umgibt. Der hohlzylindrische Innenraum kann in einem trommel- oder rohrförmigen Abschnitt des Lenkgehäuses ausgebildet sein, dessen Innenmantel einen vorgegebenen radialen Abstand zum Außenmantel hat. Es kann bevorzugt vorgesehen sein, dass das Lenkgehäuse mit einem Deckel verschlossen, bevorzugt luftdicht und/oder flüssigkeitsdicht verschlossen ist unter Verwendung eines entsprechenden Dichtelements.

Der radiale Abstand zwischen Außen- und Innenmantel kann bevorzugt so bemessen werden, dass er größer ist als ein zulässiger minimaler Biegeradius des Bandabschnitts. Dieser zulässige minimale Biegeradius gibt an, wie stark das Bandelement quer zu seiner Längserstreckung reversibel umgebogen werden kann, wobei keine oder zumindest keine relevante plastische Verformung des Bandelements auftritt. Dadurch kann sichergestellt werden, dass das Bandelement in der neutralen Mittelstellung zwischen dem Wickelkern und dem Lenksäulengehäuse zur erfindungsgemäßen Umkehrung des Wickelsinns quer zu seiner Längserstreckung von der einen in die andere Richtung umgebogen werden kann.

Es kann vorgesehen sein, dass der Außendurchmesser des Außenmantels kleiner oder gleich dem 0,5-fachen Innendurchmesser des Innenmantels ist. Dadurch kann ein radialer Abstand zwischen Innen- und Außenmantel realisiert werden, der größer oder gleich dem 0,5-fachen Außendurchmesser des Außenmantels ist, welcher dem Biegeradius des Bandabschnitts beim Aufwickeln auf den Wickelkern entspricht. Durch dieses Verhältnis zwischen Innen- und Außendurchmesser wird das Bandelement beim Wechsel des Wickelsinns nicht oder zumindest nicht wesentlich stärker umgebogen, als beim Aufwickeln. Die Biegebeanspruchung des Materials bleibt durch so gering, dass eine Vielzahl von Umkehrungen des Wickelsinns ohne Materialschäden möglich ist, und eine hohe Langlebigkeit und Zuverlässigkeit erreicht wird.

Es ist möglich, dass die Länge des Bandabschnitts zwischen dem Wickelkern und dem Lenksäulengehäuse kleiner ist als der Innenumfang des Innenmantels, bevorzugt kleiner als die 0,5-fache Summe des Innenumfangs und des Außenumfangs. In der neutralen Mittelstellung ist der auf dem Wickelkern aufwickelbare Bandabschnitt vom Wickelkern abgewickelt, und befindet sich freiliegend zwischen Innen- und Außenmantel. Durch das angegebene Verhältnis kann sich der Bandabschnitt über seine gesamte freie Länge von innen an den Innenmantel anschmiegen, so dass bei der Umkehrung des Wickelsinns im Durchgang durch die Mittelstellung eine relativ geringe und damit materialschonende Umbiegung auftritt.

Es ist vorteilhaft, dass der Bandabschnitt zwischen dem Wickelkern und dem Lenksäulengehäuse als Zugtrum ausgebildet ist. Beim Erreichen des maximal zulässigen Drehwinkels ist der Bandabschnitt auf dem Wickelkern aufgewickelt, und zwischen den gegeneinander verdrehbaren Umfangsabschnitten von Wickelkern und Lenksäulengehäuse gespannt. Dabei ist es günstig, dass das Bandelement im Zugtrum im Wesentlichen auf Zug beansprucht wird, so dass es das in das Lenkrad eingegebene Lenkmoment sicher als Zugkraft aufnehmen kann, ohne dass zusätzliche Stütz- oder Sicherungsmaßnahmen erforderlich sind. "Im Wesentlichen auf Zug beansprucht" meint, dass im Fall einer Vergleichsspannung, beispielsweise nach der Gestaltänderungsenergiehypothese, zumindest 90% auf die Zugspannung entfallen.

Eine vorteilhafte Ausführung ist, dass mindestens zwei Bandabschnitte vorgesehen sind. Die Bandabschnitte können über den Umfang verteilt angeordnet sein, bevorzugt gleichmäßig verteilt. Es können beispielsweise zwei Zugtrume gemäß der vorangehend beschriebenen Ausführung radial gegenüberliegend mit der Außenmantelfläche des Wickelkerns verbunden sein, und entsprechend mit dem Lenksäulengehäuse. Dadurch kann vorteilhaft eine redundante Anordnung geschaffen werden, die auch beim Ausfall eines Bandabschnitts eine zuverlässige Drehwinkelbegrenzung bietet.

Eine vorteilhafte Weiterbildung sieht vor, dass der Bandabschnitt mindestens zweigängig übereinander wickelbar ist.

Eine vorteilhafte Weiterbildung sieht vor, dass zumindest zwei Bandabschnitte mindestens zweigängig übereinander wickelbar sind. Dabei können bevorzugt zwei im selben axialen Wickelabschnitt am Wickelkern angreifende Zugtrume je nach Drehrichtung mit demselben Wickelsinn gemeinsam aufgewickelt werden. Dabei werden die zwei Bandabschnitte in radialer Richtung übereinander gewickelt, so dass die beiden Bandabschnitte in Form einer zweigängigen Spirale angeordnet sind. Vorteilhaft ist dabei, dass zwei - oder mehr - Bandabschnitte ohne Vergrößerung des axialen Bauraums auf dem Wickelkern aufgenommen werden können. Dadurch kann eine kompakte, redundante Anordnung realisiert werden.

Der Wickelkern und/oder das Lenksäulengehäuse können mindestens einen Querschlitz aufweisen, durch die das Bandelement hindurchgeführt ist. Ein Querschlitz bildet einen Schlitz, der beispielsweise quer zur Längsachse durch den Wickelkern durchgehen kann. Entsprechend kann ein den Wickelkern trommelförmig umgebendes Lenksäulengehäuse pro Bandabschnitt einen von dem Innenmantel radial nach außen quer durchgehenden Querschlitz aufweisen. Ein Bandelement kann einfach in den oder die Querschlitze eingehängt werden, so dass es bezüglich der beim Aufwickeln auftretenden, in Umfangsrichtung wirkenden Kräfte in beiden Wickelrichtungen zuverlässig am Wickelkern und/oder am Lenksäulengehäuse befestigt ist. Eine vorteilhafte Weiterbildung ist, dass der oder die Querschlitze stirnseitig, also axial offen sind, so dass ein flaches Bandelement in seiner Breite in Richtung der Längsachse axial in den Querschlitz eingesetzt und fixiert werden kann.

Es kann vorteilhaft sein, dass das Bandelement als geschlossene Schlaufe ausgebildet ist. Eine geschlossene Schlaufe weist ein ringförmiges Endlosband auf, welches aufgrund seiner geschlossenen Form mit geringem Aufwand ohne zusätzliche Befestigungselemente durch Einhängen am Wickelkern und am Lenksäulengehäuse befestigt werden kann. Zum Einhängen können beispielsweise hakenförmige Aufhänger oder Widerlager am Wickelkern und am Lenksäulengehäuse angeordnet sein. Eine mit geringem Aufwand realisierbare, zuverlässige Anordnung zur Befestigung der geschlossenen Schlaufe kann dadurch geschaffen werden, dass das Bandelement durch einen quer durch den Wickelkern hindurchgehenden Querschlitz hindurchgeführt ist. Aus dem Querschlitz tritt das Bandelement über zwei diametral von dem Wickelkern radial nach außen abgehende Zugtrume aus, die sich als Bandabschnitte bis zur Innenseite des Lenksäulengehäuses erstrecken und dort durch zwei - ebenfalls bezüglich der Längsachse einander diametral angeordnete - nach außen durchgehende Querschlitze hindurchgeführt sind. Zwischen diesen beiden Querschlitzen ist das Bandelement außen um das Lenksäulengehäuse herumgeführt. In den Querschlitzen ist das Bandelement in Umfangsrichtung relativ zum Außenmantel des Kernelements, und auch relativ zum Lenksäulengehäuse fixiert. Wenn die Querschlitze axial offen ausgebildet sind, kann die geschlossene Schlaufe des Bandelements zur Montage einfach axial in die Querschlitze eingesetzt werden. Auf diese Weise kann ohne weitere Befestigungsmittel eine besonders zuverlässige Verbindung erzeugt werden. Ein Vorteil für die erfindungsgemäße Umkehrung des Wickelsinns ist dabei, dass die Bandabschnitte aus den Querschlitzen in radialer Richtung ausmünden, so dass sie in beide Umfangsrichtungen umgebogen werden können.

Das Bandelement kann vorzugsweise aus einem ein Fasergewebe ausgebildet sein, beispielsweise einem Cord. Ein Fasergewebe kann durch Einsatz hochfester Fasern - beispielsweise Metall-, Aramid- oder Kohlefasern, oder dergleichen - hoch zugbelastbar, und dabei besonders flexibel ausgestaltet sein. Die hohe Flexibilität meint, dass - anders als beispielsweise bei einer Spiralfeder - bei der Biegeverformung beim Aufwickeln nur relativ geringe Rückstellkräfte auftreten. Diese Eigenschaft wird auch als biegeschlaff oder forminstabil bezeichnet. Dadurch ist das zum Aufwickeln und zum Umkehren des Wickelsinns erforderliche Moment entsprechend gering, und vom Drehwinkel abhängige elastische Rückstellkräfte, die für die Funktion des Umdrehungsbegrenzers nicht relevant und unerwünscht sind, treten nicht auf oder sind vernachlässigbar gering. Durch die Verwendung hoch zugfester Fasern kann eine hohe Zugfestigkeit des Bandelements bei geringen Abmessungen realisiert werden. Das Bandelement kann beispielsweise ein flaches, gurtförmiges, gewebtes Band aufweisen.

Das Bandelement kann einen Kunststoff und/oder einen Gummiwerkstoff und/oder einen Glaswerkstoff und/oder einen Metallwerkstoff aufweisen, oder Kombinationen davon. Bevorzugt können Faser-Verbundwerkstoffe eingesetzt werden.

Das Lenksäulengehäuse kann Teil einer Manteleinheit sein oder eine solche bilden, die mit einer am Fahrzeug montierbaren Trageinheit verbunden ist. Das Lenksäulengehäuse kann feststehend sein, oder manuell oder motorisch relativ zur Trageinheit verstellbar sein. Weiterhin kann die Lenkwelle relativ zum Lenksäulengehäuse oder zur Trageinheit in Richtung der Längsachse fest angeordnet oder verstellbar sein, ebenfalls manuell oder motorisch. Auf diese Weise kann ein feststehende, oder in Höhen- und/oder Längsrichtung verstellbare Lenksäule gebildet werden, wobei die Verstellung manuell oder mittels motorischer Verstellantriebe erfolgen kann.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3: eine schematische Axialansicht des Umdrehungsbegrenzers der Lenksäule gemäß Figuren 1 und 2 in einer ersten Drehwinkelposition (neutrale Mittelstellung),
- Figur 4: eine schematische Axialansicht des Umdrehungsbegrenzers wie in Figur 3 in einer zweiten Drehwinkelposition (Zwischenposition),
- Figur 5: eine schematische Axialansicht des Umdrehungsbegrenzers wie in Figur 3 in einer dritten Drehwinkelposition (Anschlagposition bezüglich Drehung nach rechts = im Uhrzeigersinn),
- Figur 6: eine schematische Axialansicht des Umdrehungsbegrenzers wie in Figur 3 in einer vierten Drehwinkelposition (Zwischenposition) in dem anderen Wickelsinn verglichen mit jenem in Figur 4,
- Figur 7: eine schematische Axialansicht des Umdrehungsbegrenzers wie in Figur 3 in einer fünften Drehwinkelposition (Anschlagposition bezüglich Drehung nach links = im Gegenuhrzeigersinn).

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

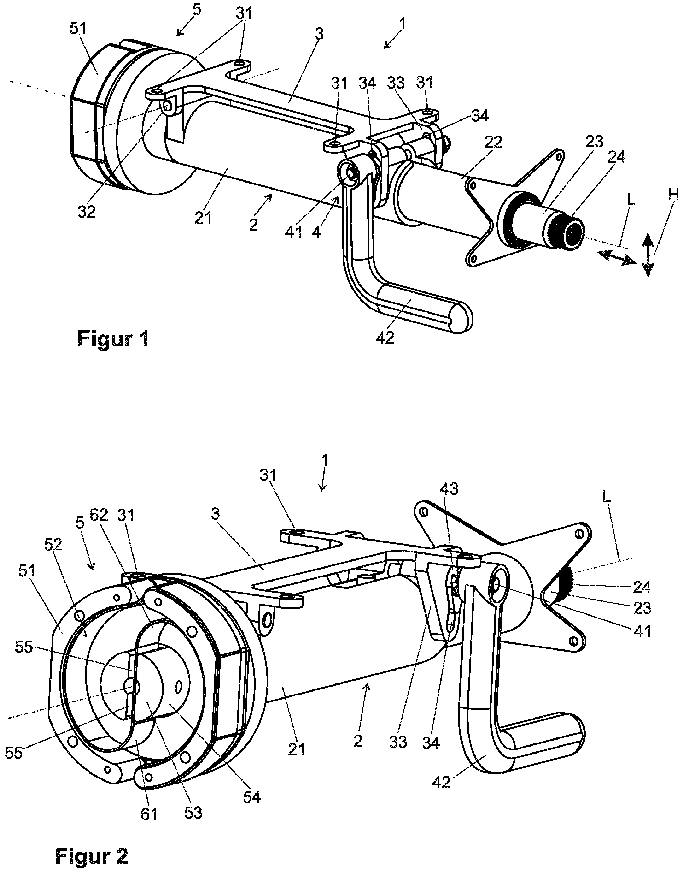

Figuren 1 und 2 zeigen in unterschiedlichen perspektivischen Ansichten eine Lenksäule 1 eines Steer-by-Wire-Lenksystems, in Figur 1 von links hinten, und in Figur 2 von links vorn, jeweils bezogen auf die Fahrtrichtung.

Die Lenksäule 1 umfasst eine Stelleinheit 2, die ein Lenksäulengehäuse 21 aufweist, welches auch als Manteleinheit oder äußeres Mantelrohr bezeichnet wird. In dem Lenksäulengehäuse 21 ist ein Mantelrohr 22 aufgenommen, in dem eine Lenkwelle 23 um die Längsachse L drehbar gelagert ist. Am bezüglich der Fahrtrichtung hinteren, dem Fahrer zugewandten Ende weist die Lenkwelle 23 einen Anschlussabschnitt 24 zur Anbringung eines hier nicht dargestellten Lenkrads auf. Zur Längsverstellung des Lenkrads ist das Mantelrohr 22 relativ zum Lenksäulengehäuse 21 in Richtung der Längsachse L teleskopartig verstellbar, wie mit dem Doppelpfeil parallel zur Längsachse L angedeutet ist.

Die Stelleinheit 2 ist von einer Trageinheit 3 gehalten, welche Befestigungsöffnungen 31 aufweist zur Anbringung an einer nicht dargestellten Karosserie eines Kraftfahrzeugs. In einem vorderen Bereich ist das Lenksäulengehäuse 21 an der Trageinheit 3 um eine horizontale, quer zur Längsachse L liegende Schwenkachse 32 verschwenkbar gelagert, wodurch eine Höhenverstellung des rückwärtigen, fahrerseitigen Endes der Lenkwelle 23 in der Höhenrichtung H ermöglicht wird.

Die Trageinheit 3 weist von der Schwenkachse 32 mit Abstand nach hinten zwei Seitenwangen 33 auf, die sich parallel zueinander nach unten erstrecken, und zwischen denen das Lenksäulengehäuse 21 aufgenommen ist.

Eine Spanneinrichtung 4 umfasst einen Spannbolzen 41, der durch in Höhenrichtung H verlaufende Langlöcher 34 durch beide Seitenwangen 33 hindurchgeführt ist. An dem Spannbolzen 41 ist ein Spannhebel 42 befestigt, mit dem der Spannbolzen 41 manuell um seine Achse gedreht werden kann.

Die Spanneinrichtung 4 weist ein Spanngetriebe 43 auf, welches eine Drehung des Spannbolzens 41 um seine Achse in einen Spannhub in Richtung seiner Achse umsetzt, beispielsweise mittels eines an sich bekannten Keilscheiben-, Nocken- oder Kippstiftgetriebes. Die Spannachse 41 ist über das Spanngetriebe 43 von außen gegen die beiden Seitenwangen 33 abgestützt. Wird der Spannhebel 41 durch manuelle Betätigung des Spannhebels 42 in die eine Richtung in die Spann- oder Fixierstellung gedreht, werden die beiden Seitenwangen 33 gegeneinander angedrückt, und dadurch wird das Lenksäulengehäuse zwischen den Seitenwangen 33 eingespannt, und dadurch relativ zur Trageinheit 3 in Höhenrichtung H fixiert. Dabei wird auch das Mantelrohr 22 in dem Lenksäulengehäuse 21 verspannt, so dass ebenfalls eine Fixierung in Richtung der Längsachse L erfolgt.

Wirr der Spannhebel 42 durch eine umgekehrte Drehung in die Lösestellung gebracht, wird der Spannhub aufgehoben, und die Einspannung des Lenksäulengehäuses 21 zwischen den Seitenwangen 33 gelöst. Der Spannbolzen 41 dann kann zur Höhenverstellung in den Langlöchern 34 in der Höhenrichtung H zusammen mit dem Lenksäulengehäuse 21 auf oder ab bewegt werden, und das Mantelrohr 22 kann in Richtung der Längsachse L zur Längsverstellung teleskopierend in das Lenksäulengehäuse 21 nach vorn eingeschoben oder nach hinten herausgezogen werden.

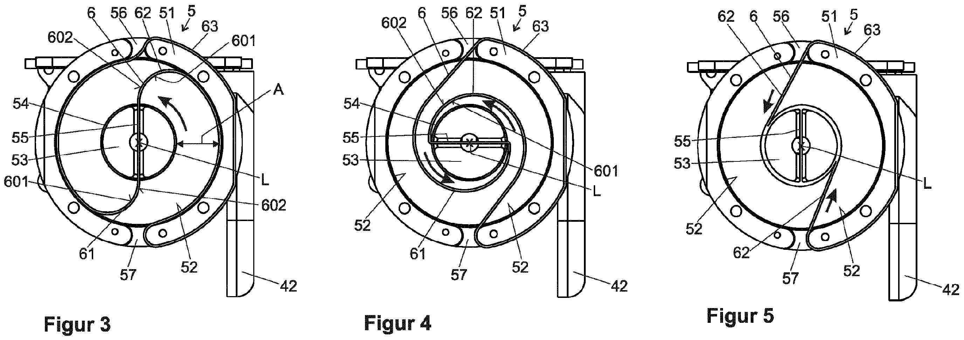

Ein erfindungsgemäß ausgestalteter Umdrehungsbegrenzer 5 ist vorn an der Lenksäule 1 angebracht. Dieser ist in Figur 2 in einer perspektivischen Ansicht vorn geöffnet dargestellt, um einen Blick ins Innere freizugeben. In den Figuren 3, 4 und 5 ist eine axiale Ansicht von vorn - in Richtung der Längsachse L - in unterschiedlichen Drehwinkelpositionen der Lenkwelle 23 gezeigt. Der Umdrehungsbegrenzer 5 ist mit einem nicht dargestellten Deckel verschließbar.

Der Umdrehungsbegrenzer 5 weist ein als Trommel 51 ausgebildetes Gehäuse auf, welches einen Teil des Lenksäulengehäuses 21 bildet, mit dem es einstückig ausgebildet, oder fest verbunden ist. Die Trommel 51 ist hohlzylindrisch ausgebildet, mit einem Innenmantel 52, der koaxial zur Längsachse L angeordnet ist.

In der Trommel 51 ist ein fest mit der Lenkwelle 23 verbundener Wickelkern 53 angeordnet, der einen zylindrischen, zur Längsachse L koaxialen Außenmantel 54 hat.

Der Außendurchmesser des Außenmantels 54 ist vorzugsweise kleiner oder gleich dem 0,5-fachen Innendurchmesser des Innenmantels 52. Der Innenmantel 52 hat von dem Außenmantel 54 einen radialen Abstand A (siehe Figur 3), der bevorzugt gleich oder größer ist als der 0,5-fache Durchmesser des Wickelkerns 53, also dem Außendurchmesser des Außenmantels 54.

Der Wickelkern 53 weist einen diametral, quer zur Längsachse L durchgehenden Querschlitz 55 auf, der nach vorn axial offen ist. Der 55 Querschlitz mündet diametral gegenüberliegend in dem Außenmantel 54.

Die Trommel 51 weist zwei einander bezüglich der Längsachse L diametral gegenüberliegende Querschlitze 56, 57 auf, welche Durchgänge vom Innenmantel 52 zur Außenseite der Trommel 51 bilden, und ebenfalls stirnseitig axial offen sind.

Ein Bandelement 6, welches als geschlossene Schlaufe ausgebildet ist, ist zwischen dem Wickelkern 53 und der Trommel 51 angebracht, wie in Figur 3 deutlich erkennbar ist. Das Bandelement 6 ist ein hoch flexibles, flaches Band mit einer Breite, welche an die axiale Breite des Außenmantels 54 angepasst ist, die auch in etwa der axialen Breite des Innenmantels 52 entspricht. Das Bandelement 6 kann ein hochfestes Fasergewebe oder einen Cordverbund aufweisen, und ist hoch flexibel, so dass bei einer Umbiegung quer zu seiner Längserstreckung und seiner Breite nur eine vernachlässigbar geringe elastische Rückstellkraft auftritt.

Das Bandelement 6 ist durch den Querschlitz 55 des Wickelkerns 53 quer zur Längsachse L hindurchgeführt, wobei der Querschlitz 55 mit einer Einführfase versehen ist, um eine Beschädigung des Bandelements 6 wirksam zu verhindern. Dadurch wird eine drehfeste Verbindung des Bandelements 6 mit dem Wickelkern 53 realisiert. Der auf der einen Seite aus dem Wickelkern 53 radial austretende Bandabschnitt 61 erstreckt sich durch den einen Querschlitz 56 hindurch zur Außenseite der Trommel 51, und der auf der anderen Seite aus dem Wickelkern 53 radial austretende Bandabschnitt 62 erstreckt sich durch den anderen Querschlitz 57 hindurch zur Außenseite der Trommel 51. Die Bandabschnitte 61 und 62 sind durch einen außen um die Trommel 51 herumgeführten Bandabschnitt 63 als geschlossene Schlaufe miteinander verbunden. Dadurch ist das Bandelement 6 in Umfangsrichtung bezüglich dem Innenmantel 52 fixiert.

Die Funktion des Umdrehungsbegrenzers 3 wird anhand der Phasendarstellungen in den Figuren 3, 4 und 5 erläutert, die jeweils unterschiedliche Drehwinkelstellungen der Lenkwelle 23 und des damit verbundenen Wickelkerns 53 zeigen.

Figur 3 zeigt die neutrale Mittelstellung. Die beiden Bandabschnitte 61, 62 münden radial aus dem Querschlitz 55 aus und erstrecken sich zugspannungsfrei bogenförmig bis zum Innenmantel 52, an dem sie sich bis zu den Querschlitzen 56, 57 anschmiegen, wo sie nach außen herausgeführt sind.

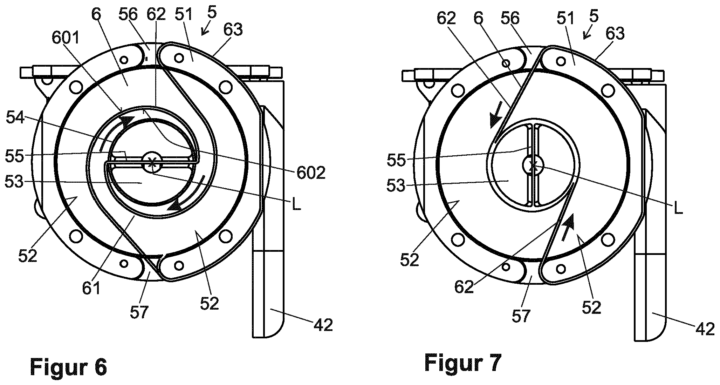

Bei einer Drehung der Lenkwelle 23 im Uhrzeigersinn dreht sich der Wickelkern 53 in der Ansicht der Figuren 2, 3, 4 und 5 entgegen dem Uhrzeigersinn, wie mit dem Pfeil angegeben, in den Figuren 6 und 7 mit dem Uhrzeigersinn.

Figur 4 zeigt eine Zwischenposition, in der deutlich erkennbar ist, wie die Bandabschnitte in Form einer zweigängigen Spirale auf dem Außenmantel 53 auf dem Wickelkern 53 aufgewickelt werden.

Die beiden Bandabschnitte 61, 62 werden durch weitere Drehung weiter aufgewickelt, bis die verbleibenden freien Bereiche der Bandabschnitte 61, 62 als Zugtrume zwischen dem Wickelkern 53 und den Schlitzen 56, 57 der Trommel 51 straff gespannt sind, wie in Figur 5 erkennbar ist. Diese stellt die eine Anschlagposition dar, also die Endposition des maximalen Drehwinkels. Ein dann über das Lenkrad in die Lenkwelle 23 eingegebenes Lenkmoment wirkt als Zugspannung auf die Bandabschnitte 61, 62, und dadurch wird eine weitere Drehung verhindert.

Jeder Bandabschnitt 61, 62 weist eine erste Oberfläche 601 auf und eine dazu gleichsinnig ausgebildete zweite Oberfläche 602 auf, wobei in dem einen Wickelsinn die erste Oberfläche 601 mit dem Wickelkern 53 in Kontakt bringbar ist und die zweite Oberfläche 602 in dem umgekehrten Wickelsinn mit dem Wickelkern in Kontakt bringbar ist. Mit anderen Worten liegt je nach Wickelsinn die erste Oberfläche 601 oder die zweite Oberfläche 602 des Bandabschnitts 61, 62 an dem Wickelkern 53 an.

Ausgehend von der neutralen Position von Figur 3 kann die Lenkwelle 23 auch in die entgegengesetzte Drehrichtung gedreht werden. Dann werden die Bandabschnitte 61, 62 in einem zum Wickelsinn der Figuren 4 und 5 entgegengesetzten Wickelsinn auf dem Wickelkern 53 aufgewickelt. Dabei treten zu den Figuren 4 und 5 spiegelbildliche Anordnungen auf. Diese sind in den Figuren 6 und 7 dargestellt, wobei Figur 7 den zu Figur 5 entgegengesetzten Endanschlag zeigt.

Figur 6 zeigt eine Zwischenposition, in der deutlich erkennbar ist, wie die Bandabschnitte 61, 62 in Form einer zweigängigen Spirale auf dem Außenmantel 53 auf dem Wickelkern 53 aufgewickelt werden, wobei die Figur 6 den umgekehrten Wickelsinn zeigt als Figur 4.

Aus den Figuren ist erkennbar, dass dank der Erfindung ein einfacherer, kompakterer Aufbau realisierbar ist.

### Bezugszeichenliste

- 1: Lenksäule
- 2: Stelleinheit
- 21: Lenksäulengehäuse
- 22: Mantelrohr
- 23: Lenkwelle
- 24: Anschlussabschnitt
- 3: Trageinheit
- 31: Befestigungsöffnungen
- 32: Schwenkachse
- 33: Seitenwangen
- 34: Langloch
- 4: Spanneinrichtung
- 41: Spannbolzen
- 42: Spannhebel
- 43: Spanngetriebe
- 5: Umdrehungsbegrenzer
- 51: Trommel
- 52: Innenmantel
- 53: Wickelkern
- 54: Außenmantel
- 55: Querschlitz
- 56, 57: Querschlitze
- 6: Bandelement
- 61, 62: Bandabschnitte
- 63: Bandabschnitt

- L: Längsachse
- H: Höhenrichtung

## Patentansprüche

1. Lenksäule (1) für ein Kraftfahrzeug, die eine relativ zu einem Lenksäulengehäuse (21, 51) um ihre Längsachse (L) drehbar gelagerte Lenkwelle (23) umfasst und zur Begrenzung der Rotation der Lenkwelle (23) einen Umdrehungsbegrenzer (5) aufweist, der einen mit der Lenkwelle (23) drehfest verbundenen Wickelkern (53) aufweist, an dem ein mit dem Lenksäulengehäuse (51) verbundenes, langgestrecktes und quer zu seiner Längserstreckung flexibel verformbares Bandelement (6) angebracht ist, welches mindestens einen Bandabschnitt (61, 62) aufweist, der auf dem Wickelkern (53) in einem Wickelsinn um die Längsachse (L) aufwickelbar ist, wobei der Wickelsinn des Bandabschnitts (61, 62) umkehrbar ist,
**dadurch gekennzeichnet,**
**dass** mindestens zwei Bandabschnitte (61, 62) vorgesehen sind, die mindestens zweigängig übereinander wickelbar sind.

2. Lenksäule (1) für ein Kraftfahrzeug, die eine relativ zu einem Lenksäulengehäuse (21, 51) um ihre Längsachse (L) drehbar gelagerte Lenkwelle (23) umfasst und zur Begrenzung der Rotation der Lenkwelle (23) einen Umdrehungsbegrenzer (5) aufweist, der einen mit der Lenkwelle (23) drehfest verbundenen Wickelkern (53) aufweist, an dem ein mit dem Lenksäulengehäuse (51) verbundenes, langgestrecktes und quer zu seiner Längserstreckung flexibel verformbares Bandelement (6) angebracht ist, welches mindestens einen Bandabschnitt (61, 62) aufweist, der auf dem Wickelkern (53) in einem Wickelsinn um die Längsachse (L) aufwickelbar ist, wobei der Wickelsinn des Bandabschnitts (61, 62) umkehrbar ist,
**dadurch gekennzeichnet,**
**dass** der Wickelkern (53) und/oder das Lenksäulengehäuse (51) mindestens einen Querschlitz (55, 56, 57) aufweisen, durch die das Bandelement (6) hindurchgeführt ist.

3. Lenksäule (1) für ein Kraftfahrzeug, die eine relativ zu einem Lenksäulengehäuse (21, 51) um ihre Längsachse (L) drehbar gelagerte Lenkwelle (23) umfasst und zur Begrenzung der Rotation der Lenkwelle (23) einen Umdrehungsbegrenzer (5) aufweist, der einen mit der Lenkwelle (23) drehfest verbundenen Wickelkern (53) aufweist, an dem ein mit dem Lenksäulengehäuse (51) verbundenes, langgestrecktes und quer zu seiner Längserstreckung flexibel verformbares Bandelement (6) angebracht ist, welches mindestens einen Bandabschnitt (61, 62) aufweist, der auf dem Wickelkern (53) in einem Wickelsinn um die Längsachse (L) aufwickelbar ist, wobei der Wickelsinn des Bandabschnitts (61, 62) umkehrbar ist,
**dadurch gekennzeichnet,**
**dass** das Bandelement (6) als geschlossene Schlaufe ausgebildet ist.

4. Lenksäule (1) nach Anspruch 1, **dadurch gekennzeichnet, dass** der Bandabschnitt (61, 62) zwischen dem Wickelkern (52) und dem Lenksäulengehäuse (51) unabhängig vom Wickelsinn in beiden Wickelrichtungen ein gleichgroßes Rückstellmoment ausübt.

5. Lenksäule (1) nach einem der vorangehenden Ansprüche, **dadurch gekennzeichnet, dass** der Wickelkern (53) einen Außenmantel (54) aufweist.

6. Lenksäule (1) nach Anspruch 5, **dadurch gekennzeichnet, dass** der Außenmantel (54) von einem hohlzylindrischen Innenmantel (52) des Lenksäulengehäuses (51) mit radialem Abstand (A) umgeben ist.

7. Lenksäule (1) nach einem der vorangehenden Ansprüche, **dadurch gekennzeichnet, dass** der Bandabschnitt (61, 62) zwischen dem Wickelkern (53) und dem Lenksäulengehäuse (51) als Zugtrum ausgebildet ist.

8. Lenksäule (1) nach einem der Ansprüche 2 oder 3, **dadurch gekennzeichnet, dass** der Bandabschnitt (61, 62) mindestens zweigängig übereinander wickelbar ist.

9. Lenksäule (1) nach einem der Ansprüche 2 oder 3, **dadurch gekennzeichnet, dass** mindestens zwei Bandabschnitte (61, 62) vorgesehen sind.

10. Lenksäule (1) nach einem der vorangehenden Ansprüche 1, 3 oder 4 bis 9, wenn von einem der Ansprüche 1 oder 3 abhängig, **dadurch gekennzeichnet, dass** der Wickelkern (53) und/oder das Lenksäulengehäuse (51) mindestens einen Querschlitz (55, 56, 57) aufweisen, durch die das Bandelement (6) hindurchgeführt ist.

11. Lenksäule (1) nach einem der vorangehenden Ansprüche 1, 2 oder 4 bis 9, wenn von einem der Ansprüche 1 oder 2 abhängig, **dadurch gekennzeichnet, dass** das Bandelement (6) als geschlossene Schlaufe ausgebildet ist.

12. Lenksäule (1) nach einem der vorangehenden Ansprüche, **dadurch gekennzeichnet, dass** das Bandelement (6) aus einem ein Fasergewebe ausgebildet ist.

13. Lenksäule nach einem der vorangehenden Ansprüche, **dadurch gekennzeichnet, dass** das Bandelement (6) einen Kunststoff und/oder einen Gummiwerkstoff und/oder einen Glaswerkstoff und/oder einen Metallwerkstoff aufweist.

## Claims

1. Steering column (1) for a motor vehicle, which comprises a steering shaft (23) mounted rotatably relative to a steering column housing (21, 51) about its longitudinal axis (L) and, for limiting the rotation of the steering shaft (23), has a rotation limiter (5) which has a winding core (53) connected to the steering shaft (23) in a rotationally fixed manner, to which is attached an elongate strip element (6) which is connected to the steering column housing (51), can be flexibly deformed transversely to its longitudinal extension and has at least one strip section (61, 62) which can be wound onto the winding core (53) in a winding direction about the longitudinal axis (L), the winding direction of the strip section (61, 62) being reversible,
**characterized in**
**in that** at least two tape sections (61, 62) are provided which can be wound on top of one another in at least two directions.

2. Steering column (1) for a motor vehicle, which comprises a steering shaft (23) mounted rotatably relative to a steering column housing (21, 51) about its longitudinal axis (L) and, for limiting the rotation of the steering shaft (23), has a rotation limiter (5) which has a winding core (53) connected to the steering shaft (23) in a rotationally fixed manner, to which is attached an elongate strip element (6) which is connected to the steering column housing (51), can be flexibly deformed transversely to its longitudinal extension and has at least one strip section (61, 62) which can be wound onto the winding core (53) in a winding direction about the longitudinal axis (L), the winding direction of the strip section (61, 62) being reversible,
**characterized in**
**in that** the winding core (53) and/or the steering column housing (51) have at least one transverse slot (55, 56, 57) through which the tape element (6) is guided.

3. Steering column (1) for a motor vehicle, which comprises a steering shaft (23) mounted rotatably relative to a steering column housing (21, 51) about its longitudinal axis (L) and, for limiting the rotation of the steering shaft (23), has a rotation limiter (5) which has a winding core (53) connected to the steering shaft (23) in a rotationally fixed manner, to which is attached an elongate strip element (6) which is connected to the steering column housing (51), can be flexibly deformed transversely to its longitudinal extension and has at least one strip section (61, 62) which can be wound onto the winding core (53) in a winding direction about the longitudinal axis (L), the winding direction of the strip section (61, 62) being reversible,
**characterized in**
**in that** the tape element (6) is designed as a closed loop.

4. Steering column (1) according to claim 1, **characterized in that** the strip section (61, 62) between the winding core (52) and the steering column housing (51) exerts an equally large restoring torque in both winding directions, irrespective of the winding direction.

5. Steering column (1) according to one of the preceding claims, **characterized in that** the winding core (53) has an outer casing (54).

6. Steering column (1) according to claim 5, **characterized in that** the outer casing (54) is surrounded by a hollow-cylindrical inner casing (52) of the steering column housing (51) with radial spacing (A).

7. Steering column (1) according to one of the preceding claims, **characterized in that** the belt section (61, 62) between the winding core (53) and the steering column housing (51) is designed as a tension strand.

8. Steering column (1) according to one of claims 2 or 3, **characterized in that** the strip section (61, 62) can be wound on top of each other in at least two directions.

9. Steering column (1) according to one of claims 2 or 3, **characterized in that** at least two belt sections (61, 62) are provided.

10. Steering column (1) according to one of the preceding claims 1, 3 or 4 to 9, if dependent from one of the claims 1 or 3, **characterized in that** the winding core (53) and/or the steering column housing (51) have at least one transverse slot (55, 56, 57) through which the tape element (6) is passed.

11. Steering column (1) according to one of the preceding claims 1, 2 or 4 to 9, if dependent from one of the claims 1 or 2, **characterized in that** the strap element (6) is designed as a closed loop.

12. Steering column (1) according to one of the preceding claims, **characterized in that** the strip element (6) is formed from a woven fibre fabric.

13. Steering column according to one of the preceding claims, **characterized in that** the strip element (6) comprises a plastic material and/or a rubber material and/or a glass material and/or a metal material.

## Revendications

1. Colonne de direction (1) pour un véhicule automobile, qui comprend un arbre de direction (23) monté rotatif par rapport à un boîtier de colonne de direction (21, 51) autour de son axe longitudinal (L) et qui, pour limiter la rotation de l'arbre de direction (23), comporte un limiteur de rotation (5) qui a un noyau d'enroulement (53) relié à l'arbre de direction (23) d'une manière fixe sur le plan de la rotation, auquel est fixé un élément de bande allongé (6) qui est relié au boîtier de la colonne de direction (51), peut être déformé de manière flexible transversalement à son extension longitudinale et possède au moins une section de bande (61, 62) qui peut être enroulée sur le noyau d'enroulement (53) dans un sens d'enroulement autour de l'axe longitudinal (L), le sens d'enroulement de la section de bande (61, 62) étant réversible,
**caractérisé en**
en ce qu'au moins deux sections de bande (61, 62) sont prévues, qui peuvent être enroulées l'une sur l'autre dans au moins deux directions.

2. Colonne de direction (1) pour un véhicule automobile, qui comprend un arbre de direction (23) monté rotatif par rapport à un boîtier de colonne de direction (21, 51) autour de son axe longitudinal (L) et qui, pour limiter la rotation de l'arbre de direction (23), comporte un limiteur de rotation (5) qui a un noyau d'enroulement (53) relié à l'arbre de direction (23) d'une manière fixe sur le plan de la rotation, auquel est fixé un élément de bande allongé (6) qui est relié au boîtier de la colonne de direction (51), peut être déformé de manière flexible transversalement à son extension longitudinale et possède au moins une section de bande (61, 62) qui peut être enroulée sur le noyau d'enroulement (53) dans un sens d'enroulement autour de l'axe longitudinal (L), le sens d'enroulement de la section de bande (61, 62) étant réversible,
**caractérisé en**
en ce que le noyau d'enroulement (53) et/ou le boîtier de la colonne de direction (51) comportent au moins une fente transversale (55, 56, 57) à travers laquelle l'élément de bande (6) est guidé.

3. Colonne de direction (1) pour un véhicule automobile, qui comprend un arbre de direction (23) monté rotatif par rapport à un boîtier de colonne de direction (21, 51) autour de son axe longitudinal (L) et qui, pour limiter la rotation de l'arbre de direction (23), comporte un limiteur de rotation (5) qui a un noyau d'enroulement (53) relié à l'arbre de direction (23) d'une manière fixe sur le plan de la rotation, auquel est fixé un élément de bande allongé (6) qui est relié au boîtier de la colonne de direction (51), peut être déformé de manière flexible transversalement à son extension longitudinale et possède au moins une section de bande (61, 62) qui peut être enroulée sur le noyau d'enroulement (53) dans un sens d'enroulement autour de l'axe longitudinal (L), le sens d'enroulement de la section de bande (61, 62) étant réversible,
**caractérisé en**
en ce que l'élément de bande (6) est conçu comme une boucle fermée.

4. Colonne de direction (1) selon la revendication 1, **caractérisée par le fait que** la section de bande (61, 62) entre le noyau d'enroulement (52) et le boîtier de la colonne de direction (51) exerce un couple de rappel de même importance dans les deux sens d'enroulement, quel que soit le sens d'enroulement.

5. Colonne de direction (1) selon l'une des revendications précédentes, **caractérisée par le fait que** le noyau d'enroulement (53) possède une enveloppe extérieure (54).

6. Colonne de direction (1) selon la revendication 5, **caractérisée par le fait que** le boîtier extérieur (54) est entouré d'un boîtier intérieur cylindrique creux (52) du carter de la colonne de direction (51) avec un espacement radial (A).

7. Colonne de direction (1) selon l'une des revendications précédentes, **caractérisée par le fait que** la section de la courroie (61, 62) entre le noyau d'enroulement (53) et le boîtier de la colonne de direction (51) est conçue comme un brin de tension.

8. Colonne de direction (1) selon l'une des revendications 2 ou 3, **caractérisée par le fait que** la section de bande (61, 62) peut être enroulée l'une sur l'autre dans au moins deux directions.

9. Colonne de direction (1) selon l'une des revendications 2 ou 3, **caractérisée par** la présence d'au moins deux sections de courroie (61, 62).

10. Colonne de direction (1) selon l'une des revendications précédentes 1, 3 ou 4 à 9, si elle dépend de l'une des revendications 1 ou 3, **caractérisée par le fait que** le noyau d'enroulement (53) et/ou le boîtier de la colonne de direction (51) présentent au moins une fente transversale (55, 56, 57) à travers laquelle l'élément de bande (6) est passé.

11. Colonne de direction (1) selon l'une des revendications précédentes 1, 2 ou 4 à 9, si elle dépend de l'une des revendications 1 ou 2, **caractérisée par le fait que** l'élément de sangle (6) est conçu comme une boucle fermée.

12. Colonne de direction (1) selon l'une des revendications précédentes, **caractérisée par le fait que** l'élément de bande (6) est formé d'un tissu de fibres.

13. Colonne de direction selon l'une des revendications précédentes, **caractérisée par le fait que** l'élément de bande (6) comprend un matériau plastique et/ou un matériau en caoutchouc et/ou un matériau en verre et/ou un matériau métallique.
